# EUROPEAN PATENT APPLICATION

(11) **EP 2 713 158 A1**
(43) Date of publication of application: **02.04.2014**
(21) Application number: 13183395.6
(22) Date of filing: 23.07.2007
(51) Int. Cl.: G01N 27/447, C09D 5/44, C12M 1/34, C25D 13/06, C25D 15/00, C09D 133/24

(54) **Coatings for capillaries capable of capturing analytes**

(30) Priority: 24.07.2006 US 833060 P; 17.08.2006 US 838766 P; 16.01.2007 US 654143
(62) Divisional of application: 07836214.2
(71) Applicant: ProteinSimple, Santa Clara CA 95051 (US)
(72) Inventor: Bordunov, Andrei V., Campbell, CA California 95008 (US); Voss, Karl O., Foster City, CA California 94404 (US); Clizbe, Lane A., Redwood City, CA California 94061 (US); O'Neill, Roger A., San Carlos, CA California 94070 (US)
(74) Representative: Webster, Jeremy Mark

(57) **Abstract**

A coating adsorbed on a surface of a microfluidic device, comprising a polymeric backbone grafted withpolymeric chains , said polymeric chains comprising at least one hydrophilic functional group X and at least one capture group Y.

## Description

### FIELD OF INVENTION

In general, the current invention relates to methods, devices and uses of adsorbed and covalent coatings. More specifically, the present invention relates to coatings that include triggerable analyte capture moieties.

### BACKGROUND

The separation and analysis of molecules in electrophoretic microfluidic devices is an important tool for characterizing analytes in biological and industrial applications (Dolnik, 2005). In this procedure a high efficiency separation of molecules is performed in a narrow bore tube using high voltage. Several commercial instruments capable of performing these procedures are available from multiple vendors including: the PA/ACE, Paragon, ProteomeLab, and CEQ product lines of instruments from Beckman Coulter; the Agilent Capillary Electrophoresis system; The CAPEL product line from Lumex; the MegaBACE DNA Analysis Systems from GE; the ABI 3000 series DNA Analysers, and; the iCE280 Analyzer from Convergent Biosciences. Additionally there are a number of microfluidic platforms that practice capillary electrophoresis in microchannels integrated into glass or plastic.

There are multiple executions of capillary electrophoresis including but not limited to capillary zone electrophoresis (CZE), isoelectric focusing (IEF), capillary gel electrophoresis (CGE), isotachophoresis (ITE), and micellar electrokinetic chromatography (MEKC).

Most capillary electrophoresis requires the use of capillary wall coatings (Horvath and Dolnik, 2001). These coatings are generally necessary to stabilize or reduce wall interactions with the analyte and to control or remove electroosmotic flow. Many wall coatings have been patented and are commercially available. Coatings can be either covalently attached to the capillary wall as described in US5,074,982; US5,143,753; and US5,840,388; or not, as described in US5,370,777; US5,552,028; and US6,355,709. The latter are known as dynamic coatings. Sometimes the separation medium and the adsorbed wall coating material are one and the same as described in US5,759,369; US5,468,365; US5,567,292, and; US6,358,385. These coatings have been limited to use for DNA sequencing only and are not suitable for other applications. Accordingly, further developments are needed for other applications.

Recently it has become desirable to analyze molecules of interest within a capillary as described in US2003/0032035A1, which shows a microfludic device for creating microarrays in capillaries. This device however, is not capable of performing electrophoresis, and thus further developments are needed.

In an advance in the art, a device is provided where capture follows an electrophoresis protocol as described in co-pending patent application US2006/0029978A1 where molecules are first separated then captured so that they are available for further analysis. In one execution of the cited invention described in US2006/0029978A1 the molecules are allowed to associate with antibodies for quantitative detection of resolved species in a method which achieves results similar to that used in a Western blot (Towbin, et. al., 1979) but in a highly advantageous unique and automated fashion. However, further developments are desirable.

### SUMMARY OF THE INVENTION

In general, embodiments of the present invention relate to microfluidic devices comprised of polymer coatings with triggerable analyte capture moieties.

In some embodiments, a microfluidic device is provided, useful in electrophoresis, that is comprised of at least one separation channel with a surface, such as but not necessarily an inner surface, and having a polymer coating introduced onto the surface. The polymer coating is comprised of moieties capable of being triggered to immobilize analytes to the surface.

In another aspect, methods of preparing a microfluidic device for use in electrophoresis are provided, comprising the steps of: exposing a surface of a separation channel to a polymer solution. The polymer solution may covalently bind to the surface of the separation channel or may adsorb to the surface to form a polymer coating. In both cases the polymer coating is capable of being triggered to form attachments to analytes.

In some embodiments the inner surface of the microfluidic device has been treated with chemistries prior to the introduction of the polymer coating that is capable of being triggered to immobilize analytes to the surface. The polymer coating that is capable of being triggered to immobilize analytes to the surface may or may not form a covalent attachment to the treated inner surface.

### BRIEF DESCRIPTION OF THE FIGURES

These and various other features and advantages of embodiments of the present invention will be apparent upon reading the following detailed description in conjunction with the accompanying drawings and the appended claims provided below, where:
FIG. 1 illustrates one architecture of a functional polymer for coating a surface in accordance with some embodiments of the present invention;
FIG. 2 depicts exemplary structures of **X** and **Y** in accordance with some embodiments of the present invention;
FIG. 3 illustrates a scheme for the synthesis of an exemplary structure for Y (in this embodiment a benzophenone derivative) according to embodiments of the present invention;
FIG. 4 illustrates another exemplary embodiment of a functional polymer that is synthesized outside of a capillary and then introduced onto a surface of the capillary. In this embodiment the polymer contains a moiety **C** capable of forming a covalent link to the surface of the separation channel;
FIG 5 illustrates specific examples of polymer coatings containing different examples of capture moieties **Y** and covalent linkage moieties **C**; and
FIG. 6 illustrates the structure of a raw glass surface and an exemplary functionalized glass surface according to embodiments of the invention.

### DETAILED DESCRIPTION

The following definitions are provided for illustration and are not intended to limit the teaching of the invention:

### Definitions

An "analyte" refers to any organic or inorganic molecule. Non-limiting examples of analytes that can be detected include proteins, oligopeptides and peptides, derivatives and analogs, including proteins containing non-naturally occurring amino acids and amino acid analogs. Other examples include, but are not limited to: carbohydrates, polysaccharides, glycoproteins, whole cells, cellular constituents such as enriched organellar fractions, bacteria, viruses, metabolites, cofactors, nucleotides, polynucleotides, transition state analogs, inhibitors, drugs, nutrients, electrolytes, hormones, growth factors and other biomolecules as well as non-biomolecules, as well as fragments and combinations of all the forgoing. An analyte can be a specific molecule one is interested in studying or it can be used to detect another molecule.

"Adsorbed" refers to the process of accumulation of a gas, liquid, or solid on the surface of a solid, as in a film or a coating. Often, but not always, the adsorbed material is a polymer.

"Block" refers to a portion of a macromolecule, comprising many constitutional units, that has at least one feature which is not present in the adjacent portions.

"Block copolymer" refers a copolymer that is a block polymer. In a block copolymer, adjacent blocks are constitutionally different, i.e., each of these blocks comprises constitutional units derived from different characteristic species of monomer or with different composition or sequence distribution of constitutional units.

"Capillary" refers to any small bore tube. Capillary usually refers to an interior channel and the wall or surface that defines it. There is no limit on the exterior configuration. A capillary could therefore be contained within a 'chip', slide, or other device containing one or more tubes. The term capillary may also refer to a capillary channel in a chip or chip-like configuration. Cross sections of a capillary are usually circular but can be any shape including but not limited to oblong, triangular, rectangular, square, polygonal, or irregular.

"Capture" refers to the adherence of an analyte to a substrate, via formation of a chemical bond, such as but not necessarily, a covalent bond, ionic bond, or complex, and the like.

"Coating" refers to any film or layer of material on a capillary wall. The composition and thickness of the film is not limited in any way.

"Capture moiety" refers to any of a wide variety of reactive chemical groups suitable for linking, covalently or otherwise, two molecules together. Suitable chemistries include, but are not limited to, photoreactive groups, chemical reactive groups, and thermoreactive groups.

"Copolymer" refers to a polymer derived from more than one species of monomer.

"Covalent bonding" refers to an intramolecular form of chemical bonding characterized by the sharing of one or more pairs of electrons between two components, producing a mutual attraction that holds the resultant molecule together.

"Graft copolymer" refers to a copolymer containing adjacent blocks that are constitutionally different. Each of these blocks comprises constitutional units derived from a different characteristic species of monomer or from species with different compositions or sequence distributions of constitutional units.

### Description

The current invention relates generally to methods, devices, systems, and the use of adsorbed and/or covalently attached coatings that contain analyte capture moieties. Upon application of these coatings to a glass or plastic surface they form a film that can mask the properties of the surface thereby introducing a new behavior to the surface. Embodiments of the inventive coatings comprise activatable or triggerable chemistries that can be used to capture molecules of interest such as biomolecules.

The use of adsorbed and/or covalently attached coatings of the invention alleviates the need for multi-step surface functionalization which is typical for the prior art preparation of glass substrates with covalently attached polymer layers (Doherty E.A.S., *et. al.,* 2003). The prior art procedures often require a pretreatment of silica substrates with reactive silanes followed by the deposition of functional polymer. The latter polymers do not have the capability to be induced to capture the electrophoretically separated analytes. In contrast, coatings according to some embodiments of the present invention can be produced in one step by contacting a solution of a premade polymer with the substrate. Unlike other prior art describing coatings used in electrophoretic separations, the embodiments of the present invention provide triggerable analyte capture moieties.

This provides advantages, for example by allowing for polymers produced as coatings to be synthesized outside of the capillaries prior to deposition according to one embodiment of the present invention. This is in contrast to prior art techniques practiced in US2006/002997SA1 which result in uncertain compositions that are poorly reproduced. Polymers synthesized outside the capillaries according to embodiments of the present invention can be produced in large batches providing a sufficient amount of material for purification and characterization. Of further advantage, characterizing the polymers prior to coating as enabled by embodiments of the present invention promotes batch to batch reproducibility. This allows use of well characterized polymeric materials for coating, instead of a mixture of unidentified molecules produced inside the capillaries upon their covalent functionalization as required by prior art techniques.

In another aspect, the inventors have discovered that adsorbed coatings according to embodiments of the present invention have proven to be an adequate replacement for covalently modified glass capillaries in terms of electroosmotic flow (EOF) suppression. Further, adsorbed coatings of embodiments of the present invention provide the separation characteristics which meet the highest standards of modem capillary electrophoresis (CE) (such as standards described in Doherty E.A.S., *et. al.*, 2003).

Embodiments of the present invention are now described in greater detail. In one aspect, adsorbed coatings used in CE for the effective separation of biomolecules are provided, comprising: a hydrophilic polymer, said polymer further comprising functional groups configured to achieve any one or more of: adheance to a glass surface, control of EOF, and inhibition of interactions between an analyte and the glass surface More specifically, in some embodiments polymer coatings of the present invention comprise (1) hydrophilic portions that provide an environment conducive to the separation of biomolecules and; (2) a sufficient amount of functional groups that adhere to the glass surface, preferably suppressing EOF and shielding the glass surface from interaction with biomolecules and; (3) functional groups that, when induced, will capture analytes of interest. There are a limited number of polymeric coatings that satisfy the first two requirements due to the difficulty of precisely balancing the ratio of hydrophilic and hydrophobic groups incorporated into a polymeric network.

For instance, adsorbing dimethylacrylamide polymer or polyvinyl pyrrolidone to a glass surface efficiently suppresses EOF by minimizing the interaction between solutes and the surface (Doherty E.A.S., et. al., 2003). A certain degree of hydrophobicity is required to adsorb a polymeric film to a glass substrate and provide for a stable coating. On the other hand, the hydrophobic properties of dimethylacrylamide polymer and its polyvinyl pyrrolidone analog make them less suitable for electrophoretic separations where good resolution of biomolecules is required (Doherty E.A.S., *et. al*., 2003). According to embodiments of the present invention, the novel developed polyvinyl alcohol grafted polymers represent materials with well balanced hydrophobic and hydrophilic properties. The hydrophobic fragments incorporated into the polymeric network contribute to strong adsorption to the glass surface and efficient capture of biomolecules. At the same time, the surface of the developed polymeric film remains predominantly hydrophilic, providing good resolution of proteins during isoelectric focusing.

In alternative embodiments of the present invention, covalently attached coatings used in CE for the effective separation of biomolecules are provided. In an exemplary embodiment, one or more polymers are synthesized outside of a microfluidic device. The polymer(s) are then introduced into the device after the polymerization process is completed or partially completed. The polymer then forms a covalent attachment to the surface of the device to form a coating therein. The covalent linkage with the surface may be achieved in a number of ways, such as but not limited to: radical based chemistry, alkylation, acylation, condensation reactions and also chemically, catalytically, enzymatically, electrochemically, photochemically or by thermally initiated processes.

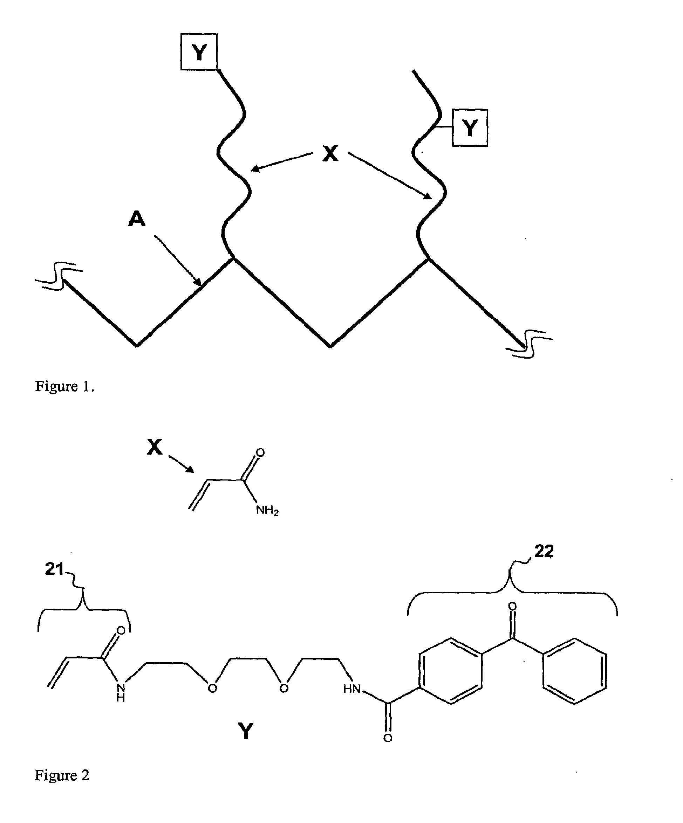

Additional embodiments of the present invention describe a novel methodology for producing or making polymers for absorbtive coatings. In addition to forming the structural fragments that provide a polymer with good adhesion and separation characteristics, such as peak resolution, embodiments of the inventive method also allows for the incorporation of photochemically active moieties into the same polymer without having a negative effect on features (1) and (2) above. In an exemplary embodiment, FIG. 1 shows a polymer comprised of a polymeric backbone **A** grafted with polymeric chains comprising: a) hydrophilic functional groups **X**, such as but not limited to primary amide groups providing an appropriate environment for the separation of biomolecules, and b) activatible capture groups **Y,** such as but not limited to alkyl or aryl halides, azo or peroxy groups, diazirines, azide groups, acetophenone, benzophenone, or anthraquinone derivatives allowing for the covalent attachment of analytes to the polymer following UV irradiation. In alternative implementations **Y** is capable of forming covalent bonds to an analyte following thermal or chemical activation.

In this embodiment a main function of the polymeric backbone of block **A** is to provide sufficient adsorbtion of the polymer to a surface, such as a capillary or channel wall. In some embodiments, polymeric backbone **A** has a molecular weight in the range of about 100 to 3,000,000 Da , preferably within a range of about 2,000-300,000 Da , and more preferably within a range of about 20,000-100,000 Da. Polymeric backbone A can be made prior to its grafting with groups **X** and **Y** or synthesized *in situ* during grafting. Polymeric backbone A is comprised of any type of linear non-cross-linked or partially cross-linked polymer which has the ability to adhere to the glass surface. In one embodiment, polymeric backbone A is comprised of a hydroxyl-containing polymer such as polyethylene glycol, polypropylene glycol, partially or fully hydrolyzed polyvinyl alcohol or a carbohydrate-based polymer such as one based on cellulose, dextran, chitosan or cyclodextrin, or other types of hydroxyl-containing polymers produced via polymerization of the hydroxyl-containing monomers or oligomers or monomers or oligomers that carry the functional groups that can be converted into the hydroxyl groups. Examples of such monomers include, but are not limited to: acrylates, methacrylates, and other vinyl- or allyl-containing compounds with hydroxyl, ester or epoxy groups being a part of their structure. In one embodiment, polymeric backbone **A** comprises ionic groups such as cation-exchange groups - sulfonic acids, carboxylic acids, phenolics, phosphonic acids, or silanol groups or anion-exchange groups - primary amines, secondary amines, tertiary amines or quaternary amines or other groups that can be converted into the ionic groups. Polymerization of these classes of compounds is well understood by those skilled in the art.

The polymer coatings described in this invention can be applied to a variety of different surfaces made of different materials. Examples of these materials include but are not limited to: glass, silicon oxide, aluminum oxide, zirconium oxide, titanium oxide, any type of polymer or plastic composition, metal, silicon, carbon, glassy carbon or combinations of the above. The wall or surfaces of the separation channel can be used in raw form or can be treated with chemical reagents prior to coating. A surface treatment may be used to improve adhesion to the surface or to suppress undesirable characteristics such as electro-osmotic flow. For instance, the glass capillaries can be treated with alkaline and/or acidic solutions of various compositions, which may also include peroxides or other oxidizing agents.

As one of many options for surface treatment prior to coating according to embodiments of the present invention, one may treat glass capillaries with various silane reagents. Hydrophobic silane reagents attached to the glass surface may improve the adhesion to hydrophobic groups incorporated into an adsorbing polymer. Examples of hydrophobic silane reagents include but are not limited to: alkyl or aryl silanes containing the reactive functionality in the form of chloro, alkoxy, amino silane or silanol groups. The reactive functionality forms a covalent Si-O-Si bond with the glass surface via interaction with surface silanol groups. The number of reactive groups in one silane molecule that form covalent bonds with the glass surface may vary depending on the purpose of the surface treatment. For instance, when a hydrolytically stable surface is required, dialkoxy, trialkoxy or bridged polyfunctional silanes including silicon polymers can be used to form more than one covalent bond between a silane molecule and the substrate surface prior to its coating with an adsorbtive polymer. The reactive silanes can also be used to make the surface more hydrophilic prior to coating. In the latter case, the reactive silanes, preferably alkoxy silanes containing various hydrophilic moieties can be utilized. Examples of these hydrophilic moieties include but are not limited to: alcohols, epoxy groups, amides, sulfonamides, carbamates, urea, ethers, esters, polyethylene oxide groups, carboxylic acids, sulfonic or phosphonic acids, amines, secondary amines, tertiary amines, or quaternary amines, and also the groups that can be converted to these moieties, or combinations of the above.

Another embodiment for surface treatment prior to coating according to the present invention is the formation of C-Si bonds between a glass surface and an undercoating molecule. The latter can carry either hydrophobic or hydrophilic groups. This particular type of surface treatment can be performed with organometallic reagents as described in US00514753A.

Additionally, another embodiment of the present invention provides for surface treatment prior to applying a coating of the present invention by depositing a layer of an adsorbtive or covalently attached polymer onto the surface, providing better adhesion to the second adsorbtive polymer that contains activatible groups Examples of the polymers that can be used for surface treatment prior to coating with an adsorbtive activatible layer include but are not limited to: polyethylene glycol polymers, polypropylene glycol polymers, polybutadiene polymers, polyurethane polymers or polymers produced from any type of acrylic, methacrylic, styrenic, allylic, or vinyl monomers or combinations thereof. The polymers that can be used for surface treatment prior to coating with an adsorptive activatible layer may contain a variety of functional groups that may facilitate the adsorption of the activatible polymer to the surface of the separation channel or surface via physical adsorption, via physical adsorption followed by covalent bonding, via metal chelation, coordination to metals, hydrogen bonding, hydrophobic interactions, hydrophilic interactions, electrostatic interactions, □ □ interactions or any combination of the above.

According to some embodiments of the present invention, the groups **X** provide a hydrophilic functionality which is compatible with aqueous media. The final product - polymer may comprise multiple functional groups **X** of the same type or a combination of different **X** moieties. Examples of functional groups **X** include, but are not limited to: amides, sulfonamides, ethers, esters, thiols, carbamates, urea, alcohols, sulfonic acids, carboxylic acids, phenolic, phosphonic acids, silanol groups, amines, secondary amines, tertiary amines, or quaternary amines.

According to some embodiments of the present invention, the groups **Y** can be comprised of photochemically activatible moieties such as alkyl or aryl halides, azo or peroxy groups, diazirines, azide groups, acetophenone, benzophenone, or anthraquinone derivatives.

Although an exemplary synthesis of polymer (as shown in example 3) describes the incorporation of photochemically activatible group **Y** for the purpose of capturing the analytes, other activation mechanisms besides photocapture can be utilized to trigger the formation of a covalent bond or an interaction between analytes and the surface of the separation channel or surface so that the analytes adhere to the surface as a result of such interaction. Thus, an activatible group **Y** is not limited to the photoactive functionalities, and can be represented by any other activatible groups such as thermoactivatible groups, or by groups that can be activated for capture in the presence of a chemical reagent or catalyst. For instance, in addition to the examples ofphotoactivatible groups mentioned earlier, the groups **Y** can comprise epoxy groups, alcohols, esters, thiols, aldehyde groups, enoles, phospho-organic, boroorganic, metal organic functionalities and others.

FIG.1 depicts a possible architecture of a polymer useful as an adsorbed coating according to some embodiments of the present invention. The final product described in the present invention is not limited to the structure illustrated in the Figure 1. For instance, the final coating may have groups **X** and **Y** located on different strands attached to the polymeric backbone A. Alternatively, the polymeric backbone **A** can be functionalized with branched strands of polymers comprising the groups **X** and **Y** in various positions. One skilled in the art may also incorporate both groups **X** and **Y** into **A** using a monomer comprising the groups **X** and **Y** in one molecule, among other arrangements.

The functionalization of polymeric backbone **A** with groups **X** and Y can be carried out via various synthetic routes. In one embodiment, the polymeric backbone **A** has one or more reactive sites of the same or different nature, which is grafted with the polymeric chains independently comprising the groups **X** or **Y** or both. These polymer chains can be synthesized prior to grafting, and can be further attached covalently to the polymeric backbone of **A.** The groups **X** and **Y** may also serve as attachment points connecting the polymeric chains to the polymer **A.** Moreover, polymeric backbone **A** may also incorporate the groups **X** and **Y** containing polymer strands via various interactions between these strands and polymeric backbone **A.** In this latter case, there is no covalent connection between the polymeric backbone **A** and the groups **X** and/or **Y** containing polymer strands. The interactions between **A** and the **X** and/or **Y** containing polymer strands can be independently hydrophobic, hydrophilic, hydrogen bonding, metal ion chelation and coordination, electrostatic interactions, □ □ interactions and others. Some of these interactions can lead to an entanglement, formation of complexes or tertiary structures between **A** and the **X** and **Y** containing polymer strands, which hold the functional elements **A, X**, and **Y** together.

As a preferable way of combining the elements **A, X,** and **Y** in a single material, one skilled in the art may consider the covalent attachment of the elements **A, X**, and **Y** by grafting a polymeric backbone **A** using one or several individual monomers carrying the groups **X** and **Y.** Examples of relevant grafting processes can be found in (Jalal Zohuriaan-Mehr, M., 2005). The mechanisms of grafting include radical polymerization via proton abstraction, radiation-initiated polymerization, chemically-initiated polymerization, ring-opening polymerization, and anion or cation-initiated polymerization.

In other embodiments, a polymer coating is synthesized by grafting a pre-made polymeric backbone **A** with two individual monomers providing the polymer of the invention with functional groups **X** and **Y,** respectively, where both **X** and **Y** are attached covalently to the polymeric backbone of **A.** In one embodiment, the polymeric backbone A comprises one, two or more hydroxyl groups or other groups that can be converted into hydroxyl groups either during grafting or during their further chemical modification. Polymeric backbone A may also comprise a mixture of different polymers of various nature and various molecular weights. In one embodiment, polymeric backbone A is comprised of polyvinyl alcohol with a molecular weight in a range of about 2,000 Da to 300,000 Da.

In an illustrative embodiment as shown in FIG. 2, acrylamide is chosen as a hydrophilic monomer that provides a suitable environment for the separation of biomolecules, **X**. A photochemically active group **Y** is incorporated into the polymer structure by radical copolymerization of **A,** acrylamide, and a photochemically active monomer comprising the group **Y.** In one embodiment, the group **Y** is covalently attached to the polymer via grafting of **A** with acrylamide **X**, and a benzophenone **22** containing an acrylate **21** derivative of benzophenone **Y.**

In another embodiment, a hydroxyl containing polymeric backbone **A** is grafted with polymer strands produced from **X** and **Y** containing monomers using Ce⁴⁺ as an initiator. First, Ce⁴⁺ forms radicals on the alpha carbon atoms of polymeric backbone **A,** which are next to the hydroxyl groups of **A.** Reference Jalal Zohuriaan-Mehr, M., 2005 which refers to an initiation process that may be used. The radicals formed on the backbone of **A** start the polymerization of **X** and **Y** containing monomers which are both present in the reaction mixture. Thus, the functional groups **X** and **Y** become incorporated into the polymeric chains that are covalently attached to polymeric backbone **A.**

Example 1 below describes an exemplary method for the preparation of polymer via the grafting of polymeric backbone **A** with **X-** and **Y**-containing monomers, according to one embodiment of the present invention. The exemplary structures of the **X** and **Y** containing monomers are given in FIG. 2. The Examples herein are provided for illustration purposes only and do not limit the teaching of the present invention in any way. As will be appreciated by those of skill in the art, the concepts and teachings herein, for example of synthesizing and using the polymers of general structure (FIG. 1) for the separation and capture of biomolecules, are novel and have been applied neither separately nor in combination with electrophoretic separations for analytical and diagnostic applications.

In other embodiments, **Y** containing monomer is comprised of: **(1)** one or more photochemically reactive groups, for example but not limited to: alkyl or aryl halides, azo or peroxy groups, diazirines, azide groups, acetophenone, benzophenone (shown as element 22 on FIG. 2), or anthraquinone derivatives that are used to capture analytes, and **(2)** one or more functional groups that are used to incorporate **Y** into the final polymer. In the exemplary embodiment, the groups described in (2) directly above that allow for covalent attachment of **Y** to polymeric backbone **A** are either polymerizable functional groups such as a double bond which can be acrylic (shown as element 21 on FIG. 2), methacrylic, styrenic, allylic, vinyl, or any other functional groups that can form a covalent bond between **A** and **Y.** A particular structure of the **Y**-containing monomer depicted in FIG.2 has a photochemically reactive group **(1)** represented by the benzophenone fragment, and group (2) represented by the acrylamide moiety.

The benzophenone groups undergo conversion into long-lived triplet diradicals upon UV irradiation, which further form covalent bonds with different fragments of biomolecules via proton abstraction. An example of mechanisms of photocapture and a comprehensive list of other organic reagents that may be used as capture sites for biomolecules upon their photochemical activation are described in Fleming S.A., 1995 which is hereby incorporated by reference; which given the teaching of the present invention may then be employed in embodiments of methods and systems of the present invention.

As mentioned above, the hydrophilicity/hydrophobicity balance and photochemical reactivity parameters of the polymer of the invention are important, and this balance is achieved in some embodiments of the present invention by making certain structural modifications of **Y**-containing monomers. These modifications include, but are not limited to, adding a particular substituent to aromatic fragments of the benzophenone molecule and/or varying the length and/or nature of the linker connecting the photoactive and polymerizable groups of **Y**-containing monomer.

In one embodiment, a polymerizable group of **Y**-containing monomer is a double bond which can be acrylic **21,** methacrylic, styrenic, allylic, vinyl and others. The incorporation of **Y** into the polymer of the invention can also be performed by the insertion of radicals, carbenes or nitrenes formed from **Y** during its photochemical activation. In this latter case, **Y** may comprise a group that is able to form a radical, carbene or nitrene, and is not represented by the acrylic, methacrylic, styrenic, allylic, or vinyl group.

The nature and chain length of the linker connecting sites **21** and **22** of **Y** described above can be adjusted in accordance with solubility requirements and hydrophilicity/hydrophobicity characteristics of the polymer of the invention. In one embodiment, **Y**-containing monomer has a -CONH(CH₂CH₂O)ₙNHCO- linker connecting the polymerizable acrylic double bond **21** to the capture moiety benzophenone **22** (as shown in FIG. 2). A linker between **21** and **22** may comprise any alkyl, aryl or heterocyclic fragments that may incorporate carbon, silicon, oxygen, sulfur, nitrogen and phosphorous atoms in any hybridization state and any succession.

Although a linker connecting groups **21** and groups **22** comprise preferably neutral hydrophilic groups such as polyethylene glycol fragments, amide groups, hydroxyl groups and others, it may also comprise hydrophobic moieties such as hydrocarbon fragments, aromatic rings and fluorinated hydrocarbon groups, or ionic groups such as carboxylic acids, sulfonic acids, phosphonic acids, amino groups, secondary amino groups, tertiary amino groups or quaternary amino groups, depending on particular requirements for the separation and capture of biomolecules using the separation channels or surfaces coated with polymers of the invention.

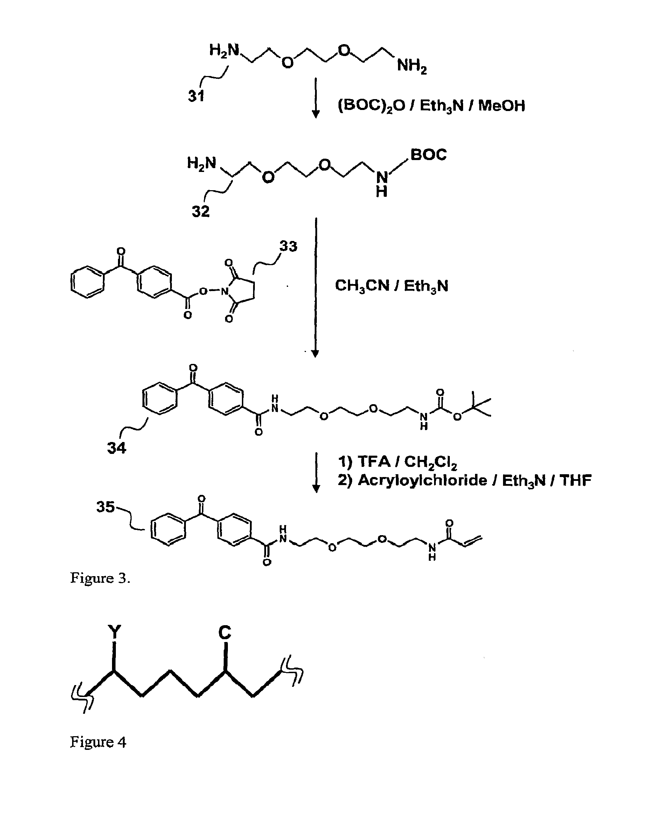

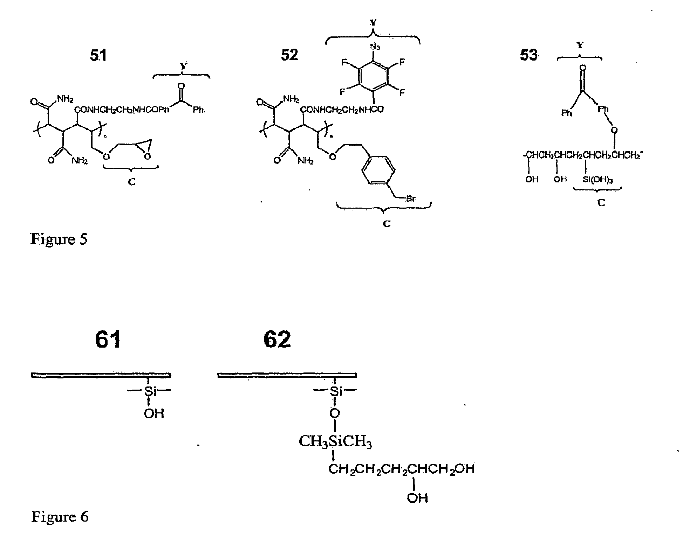

Embodiments of the present invention provide for covalently attached coatings capable of being triggered to capture analytes. Referring to FIG. 4, a functional polymer is shown which can be synthesized outside of a capillary, array, separation channel, or other suitable device, and then introduced into the channel or surface after a polymerization process is completed or partially completed. For simplicity the term separation channel is used to describe this embodiment, but those of skill in the art will recognize that any suitable device may be used. Polymer contained within the internal volume of the separation channel is either adsorbed or covalently attached to the surface of the separation channel via one or several chemical processes. Covalent linkages of the polymer with the surface can be produced by a number of techniques, including but not limited to: radical-based chemistries, alkylation, acylation, condensation reactions, and also chemically, catalytically, enzymatically, electrochemically, photochemically or by thermally-initiated processes. In this embodiment, a linkage moiety **C** may be added in addition to the triggerable capture moiety **Y.** Non limiting examples of such polymers with various **Y** and **C** moieties are shown in FIG. 5 for illustrative purposes.

In some embodiments, the surface of a microfluidic channel is comprised of a raw substrate such as glass, polymer, carbon, glassy carbon, metal, metal oxide, silicon, silicone, and the like. In other embodiments, the surface of the separation channel is comprised of raw substrate that is chemically or physically modified prior to covalent attachment of the functional polymer. The surface may be modified by a number of techniques, including for example, but not limited to: coating, grafting, corona discharge, vapor deposition, plasma vapor deposition, and attachment of a variety of functional molecules such as polymers, reactive silanes, thiols, and other small molecules which provide the surface of the device with the ability to further form a permanent attachment, or covalent bond with the polymer capable of being triggered to capture an analyte.

Examples of surfaces that can be covalently functionalized with pre-made polymers (sometimes referred to as an "undercoat") according to embodiments of the invention are illustrated in Fig. 6. The specific examples shown in FIG. 6 represent a small fraction of the surfaces that can undergo covalent modification with the functional polymer. The functional polymer can comprise different compositions of structural fragments that are compatible with the conditions of electrophoresis and can be arrived at with routine experimentation based on the present teaching.

In some embodiments, functional polymers of the present invention further comprise one or more activatible chemical groups **Y** as shown in FIG. 4, which can be triggered to capture the molecules of analytes upon photochemical, chemical, electrochemical, thermal or other activation processes.

Examples of photoactivatible groups include, but are not limited to: a benzophenone, an anthraquinone, or an acetophenone derivatives; and also azides, alkyl and aryl halides, azo compounds and the like. The nature and morphology of the functional polymer of the invention can vary depending on a particular application. Thus, functional polymer can be comprised of a co-polymer, grafted polymer, brush polymer, dendrimer, gel, particles, foam, block co-polymer and the like. In some embodiments, functional polymer is comprised of polyvinyl alcohol, polybutadiene, polystyrene, polyacrylamide, polymethacrylamide, polyvinylpyrrolidone, polyethylene glycol, polypropylene glycol, polyethylene imine, polysiloxane, polyacrylonitrile fragments or other functionalities and heteroatoms.

As illustrated in FIG. 4, in other embodiments functional polymer further comprises chemical groups **C** that can form a covalent attachment to the surface of the separation channel. Examples of these groups **C** include but are not limited to hydroxy, epoxy, amino, carboxy, azide, aldehyde, ketone, alkyl and aryl halides, esters, acyl chlorides, thiols, silanes, alkenes, dienes and others. In one embodiment, group **C** compounds may additionally capture the molecules of analytes in a manner that is similar or different from the capture mechanisms of group **Y** compounds. In other embodiments, group **Y** compounds may also form covalent bonds with the surface of the separation channel in a manner that is similar or different from the attachment mechanisms of groups **C.**

Referring again to FIG. 4, according to some embodiments a general structure of a polymer for practicing the invention is shown for illustration purposes, and limits neither the structural or functional characteristics of the polymer, and the modes in which the different elements of functional polymer are bound together. Exemplary structures of functional polymer useful for covalent functionalization of the separation channels are shown in Fig. 5. For instance, exemplary structure **53** comprises the benzophenone molecule as an activatible group **Y** for capturing analytes. Group **C** of polymer **53** is represented by a trihydroxysilane moiety. In this embodiment group C is capable of reacting with the surface of raw glass **61** (shown in Fig. 6) and to form a covalent bond between polymer **53** and silanol groups of the raw glass. Other examples of group C molecules that can covalently link directly to raw glass include activated silanes comprising chloro, alkoxy, and amino groups directly attached to the silicon atom of the silane molecule.

In another embodiment the raw glass is chemically derivatized prior to addition of the polymer of the invention that is capable of forming a covalent linkage. These derivatized surfaces, also called undercoated surfaces, do not contain triggerable analyte capture moieties. Rather, they introduce characteristics that enable electrophoresis or provide a substrate for the activatable polymer to form a covalent linkage to. An exemplary structure of such an undercoating is shown in polymeric structure **62** of FIG 6. Exemplary polymers of the invention **51** and **52** contain groups C capable of forming a covalent linkage with the derivatized glass **62.** In exemplary structure **51,** groups Y and C are represented by benzophenone and an epoxy respectively. In an exemplary structure **52,** groups **Y** and **C** are represented by the azide and benzyl bromide moieties, respectively.

The following examples are provided for illustration purposes only, and are not intended to limit the scope of the invention in any way. The identity of all synthesized small organic molecules was confirmed by NMR spectroscopy and mass spectrometry methods.

### Example 1

### Step 1 Synthesis of BOC-protected acrylamide-benzophenone derivative (FIG. 3)

A suspension of 1.38 grams of 1-[(4-benzoylbenzoyl)oxy]-2,5-pyrrolidinedione **33** (C. Thiele and F. Fahrenholz, 1993) in 30 mL of acetonitrile was treated with 1.79 mL (3 eq) of triethylamine and a solution of 1.59 grams (1.5 eq) of [2-[2-(2-aminoethoxy)ethoxy]ethyl]carbamic acid, 1,1-dimethylethyl ester **32** (R.N. Zuckermann, *et*. *al.*, 1994) in 5 mL of acetonitrile added in one portion. The solution became homogeneous over the next two minutes. The reaction was stirred at room temperature for 3 hr, and the solution was concentrated to give a residue, which was partitioned between 100 mL of ethyl acetate and 50 mL of water. The organics were washed with another 100 mL of water; and then dried over sodium sulfate. Filtration and concentration gave a light orange oil, which was subjected to flash column chromatography on silica gel first with 1%, and then with 2% methanol in dichloromethane. The appropriate fractions were combined and concentrated to give 1.91 g of the desired product **34.** This was used in the next reaction without further purification.

### Step 2 Synthesis of monomer 35 (FIG. 3)

A solution of the BOC-protected benzophenone derivative **34** in 10 mL of dichloromethane was treated with 6 mL of trifluoroacetic acid, and the reaction was stirred at room temperature for 2 hr, at which time the reaction was complete (TLC, silica gel, 5% ethyl acetate in dichloromethane). The reaction was concentrated to give an oil, which was reconcentrated with 25 mL of hexane and 25 mL of ethyl acetate to give a yellow residue. This material was used in the next step without further purification.

A solution of the above amine in 20 mL of dichloromethane was treated with 2.3 mL (4 eq) of triethylamine, followed by the drop-wise addition of 500 □L (1.5 eq) of acryloyl chloride. The reaction was stirred at room temperature for 3 hr, and then the solution was concentrated to give an orange semisolid. This was partitioned between 100 mL of ethyl acetate and 50 mL of water. The organics were washed with another 50 mL of water, then with 25 mL of saturated aqueous NaCl. Filtration and concentration gave an orange oil, which was subjected to flash column chromatography on silica gel with 4% methanol in ethyl acetate. The appropriate fractions were combined and concentrated to give 2.32 grams of a very light-yellow oil. This was taken up in 10 mL of ethyl acetate to give a slightly cloudy solution, which was filtered through celite, using ethyl acetate to wash the celite. The solution was concentrated to a volume of about 10 mL, and 5 mL of hexane was added. The solution became cloudy and an oil began to separate. A crystal of authentic product was added, and the mixture was stirred while a crystalline solid began to form. After stirring for 1 hr, the solid was isolated by filtration, washed with 10 mL of 50% ethyl acetate in hexane, and then air-dried to give 855 mg (51%) of the desired product **35** as a white solid.

### Step 3 Production of PVA-based polymer that coats raw glass capillaries

0.15 g of polyvinyl alcohol was dissolved in 1.5 ml of hot water and cooled to 25°C. Then, 15 g of acrylamide **X** (FIG. 2) was added. 40 mg of monomer **35** (FIG.3) was dissolved in 0.5 ml of DMSO and added to the solution of polyvinyl alcohol and acrylamide. The reaction mixture was purged with argon for 1 hr. Then 150 □l of a 0.073 M solution of ceric ammonium nitrate and 40 □l of glacial acetic acid was added to it and mixed thoroughly with vortexing. The solution was tumbled at 25°C for 6 hr. Then, it was diluted with 8 ml of water and centrifuged for 15 min. A clear solution was separated from the residue. The solution was dialyzed for 72 hr using a 25,000 MWCO SpetrumLab RC membrane, and then centrifuged. A clear solution was lyophilized overnight. 0.12 g of solid polymer was obtained after lyophilization.

### Step 4 Introduction into the capillary

1N HCl was passed through 100 □ ID fused-silica capillaries (Polymicro Technologies Phoenix, AZ, USA) over 45 min. time period. The capillaries (1 m segments) were flushed with a solution of 75 mg of the polymer produced in example 3 (suspended in 3 ml of DI water) for 3 hr using 15 psi pressure from an argon cylinder to drive the liquid through the capillary. The capillaries were washed with DI water for 15 min, and dried with argon.

### Example 2 Production of an acrylamide-based polymer and the use of a derivatized capillary surface.

A solution of 4% (w/v) acrylamide (Sigma A3553) and 4 mol% of the acrylamide benzophenone monomer **35** was prepared in a total volume of 1 mL of DMSO (dimethylsulfoxide, EMD MX1456-6) in a 4 mL autosampler vial. The vial was capped, vortexed, and inverted several times to dissolve the materials. A 21 gauge needle was connected to the argon line and the free end of the line inserted into the open vial. The mixture was degassed with argon for a minimum of 20 minutes. 4 µL of ammonium persulfate solution (50 mg Aldrich A7460 dissolved in 200 µL H₂O) and 1 µL TEMED (Aldrich T-7024) were added to the mixture, which was then mixed by degassing for another 30 seconds. The reaction mixture was left to polymerize overnight. The polymerization mixture was pumped through the capillaries according to the procedure from example 4.

100 □ ID fused-silica capillaries functionalized with vinyl groups which were directly attached to the Si atom according to US00514753A (Polymicro Technologies Phoenix, AZ, USA), were flushed with the DMSO solution of the polymer.

### Example 3 Phenyl derivatized surface or under coat

The procedure from example 2 was used to coat 100 □ ID fused-silica capillaries functionalized with phenyl groups directly attached to Si atoms of the glass capillaries according to US00514753A (Polymicro Technologies Phoenix, AZ, USA).

### Example 4 Ethyl derivatized surface or under coat

The procedure from example 2 was used to coat 100 □ ID fused-silica capillaries functionalized with ethyl groups directly attached to Si atoms of the glass capillaries according to US00514753A (Polymicro Technologies Phoenix, AZ, USA).

### Example 5 Silane-based chemistry derivatized surface or undercoat

The procedure from example 2 was used to coat 100 □ ID fused-silica capillaries (Polymicro Technologies Phoenix, AZ, USA) functionalized with ((chloromethyl)phenylethyl)-dimethylchlorosilane. The functionalization of raw glass capillaries with ((chloromethyl)phenylethyl)-dimethylchlorosilane was carried out as follows. A solution of ((chloromethyl)phenylethyl)-dimethylchlorosilane in toluene (1/1, v/v) was used to fill dry capillaries (1 m segments) previously treated in sequential manner with 1 M NaOH, 1M HCl, and water. The ends of the capillaries were sealed with a torch, and the capillaries were placed into a 100°C oven overnight. The toluene solution was removed with dichloromethane pumped into the capillaries at 15 psi.using argon. Capillaries were dried with argon.

### REFERENCES

The following references are provided in the specification of the subject application and are incorporated by reference herein.
Dolnik, V. 2005. Capillary electrophoresis of proteins 2003-2005. Electrophoresis, Vol 26, pp 1-16;
Doherty, E. A. S., R. J. Meagher, M. N. Albarghouthi, and A. E. Barron. 2003. Microchannel wall coatings for protein separations by capillary and chip electrophoresis. Electrophoresis, Vol 24, pp 34-54;
Horvath, J., V. Dolnik. 2001. Polymer wall coatings for capillary electrophoresis. Electrophoresis, Vol 22, pp 644-655;
Fouque, B., S. Porte, M. Balakirev, M. Berger, F. Perraut, and F. Chatelain. 2003. Light directed assembly of microarray in a glass capillary. Abstracts of the 7th International Conference on Miniaturized Chemical and Biochemical Analysis Systems. Oct 5-9. Squaw Valley, CA., USA;
Towbin, H., T. Staehlin, J. Gordon, Electrophoretic transfer of proteins from polyacrylamide gels to nitrocellulose sheets: procedure and some applications. Proc. Natl. Acad. Sci. USA. 76, 4350 (1979);
Jalal Zohuriaan-Mehr, M., Advances in chitin and chitosan modification through graft copolymerization: a comprehensive review, Iranian Polymer Journal, 14 (3), 235 (2005);
Fleming S.A., Tetrahedron, Vol 51, No 46, 12479, (1995);
C. Thiele, F. Fahrenholz, Biochemistry, 32, 2741, (1993); and
R. N. Zuckermann, E. J. Martin, D.C. Spellmeyer, G. B. Stauber, K. R. Shoemaker, J. M. Kerr, G. M. Figliozzi, D. A. Goff, M. A. Siani, R. J. Simon, S. C. Banville, E. G. Brown, L. Wang, L. S. Richter, and W. H. Moos, J. Med. Chem. 37, 2678, (1994).

While the invention has been described in connection with specific embodiments it is evident that many variations, substitutions, alternatives and modifications will be apparent to those skilled in the art in light of the foregoing description and teaching. Accordingly, this description is intended to encompass all such variations, substitutions, alternatives and modifications as fall within the spirit of the appended claims.

The following numbered Paragraphs contain statements of broad combinations of the inventive technical features herein disclosed:
1. A microfluidic device comprising at least one surface that has been exposed to a polymer solution, said polymer being capable of being selectively triggered to bind analytes which have been separated by electrophoresis.
2. The device in Paragraph 1, where the at least one surface is the inner surface of a capillary.
3. The device of Paragraph 1, where the polymer forms a coating which is adsorbed or covalently attached, or is both adsorbed and covalently attached to the at least one surface,.
4. The device in Paragraph 1, where the binding of analytes is triggered photochemically.
5. The device of Paragraph 1, where the polymer further comprises one or more molecules, and the molecule being triggered is a benzophenone.
6. The device of Paragraph 1, where the polymer further comprises one or more molecules, and the molecule being triggered is an azidotetrafluorobenzene.
7. The device in Paragraph 1, where the binding of analytes is triggered thermally.
8. The device in Paragraph 7, where the polymer being triggered is a thermally sensitive polymer.
9. The device in Paragraph 1, where the binding of analytes is triggered in the presence of a chemical reagent, enzyme, catalyst, or mixtures thereof.
10. The device in Paragraph 1, where the polymer is a random copolymer
11. The device in Paragraph 1, where the polymer is a graft copolymer
12. The device in Paragraph 1, where the polymer is a block copolymer
13. The device in Paragraph 1, where the polymer comprises acrylamide.
14. The device in Paragraph 1, where the polymer comprises polyvinylpyrrolidone.
15. The device in Paragraph 1, where the polymer comprises N-substituted or N, N-disubstituted acrylamide.
16. The device in Paragraph 1, where the polymer comprises polyvinyl alcohol.
17. The device in Paragraph 1, where the polymer comprises carbohydrate polymer.
18. The device in Paragraph 1, where the analytes are biomolecules.
19. The device in Paragraph 1, where the analytes are proteins.
20. The device of Paragraph 1, where the surface is plastic.
21. The device in Paragraph 1, where the surface is glass.
22. The device in Paragraph 1, where the surface comprises functional groups that were formed thereon prior to the exposing to the polymer solution.
23. The device in Paragraph 22, where the functional groups comprise polymer.
24. The device in Paragraph 22, where the functional groups comprise organosilanes covalently bound to the surface.
25. The device in Paragraph 24, where the organosilanes are comprised of alkyl or aryl silanes, or both alkyl and aryl silanes.
26. The device in Paragraph 22, where the functional groups are attached to the surface through a silicon oxygen bond.
27. The device in Paragraph 22, where the functional groups are attached to the surface through a silicon carbon bond.
28. The device in Paragraph 22, where the functional group comprises benzyl chloride.
29. The device in Paragraph 22, where the functional group comprises a vinyl group.
30. A method of preparing a microfluidic device for use in electrophoresis comprising exposing a surface of at least one separation channel to a polymer solution where the polymer is capable of being triggered to form attachments to analytes.
31. A method of Paragraph 30, where the polymer is adsorbed or covalently attached, or is both adsorbed and covalently attached to the at least one surface,.
32. The method of Paragraph 30, where the attachment to analytes is triggered photochemically.
33. The method of Paragraph 30, where the attachment to analytes is triggered thermally.
34. The method of Paragraph 30, where the attachment to analytes is triggered in the presence of a chemical reagent, enzyme, or catalyst, or mixtures thereof.
35. The method of Paragraph 30, where the polymer further comprises one or more molecules, and the molecule being triggered is a benzophenone.
36. The method of Paragraph 30, where the polymer further comprises one or more molecules, and the molecule being triggered is an azidotetrafluorobenzene.
37. The method of Paragraph 30, where the polymer further comprises one or more molecules, and the molecule being triggered is a thermally sensitive polymer.
38. The method in Paragraph 30, where the polymer is a random copolymer.
39. The method in Paragraph 30, where the polymer is a graft copolymer.
40. The method in Paragraph 29, where the polymer is a block copolymer.
41. The method in Paragraph 30, where the polymer comprises acrylamide.
42. The method in Paragraph 30, where the polymer comprises polyvinylpyrrolidone.
43. The method in Paragraph 30, where the polymer comprises N-substituted or N, N-disubstituted acrylamide.
44. The method in Paragraph 30, where the polymer comprises polyvinyl alcohol.
45. The method in Paragraph 30, where the polymer comprises carbohydrate polymer.
46. The method of Paragraph 30, where the analytes comprise biomolecules.
47. The method of Paragraph 46, where the biomolecules are proteins.
48. The method of Paragraph 30, where the surface is comprised of glass.
49. The method of Paragraph 30, where the surface is comprised of plastic.
50. The method of Paragraph 30, further comprising the step of covalently functionalizing the surface prior to exposing the surface of the at least one separation channel to the polymer solution.
51. The method of Paragraph 30, comprising the step of functionalizing the surface via adsorption prior to exposing the surface of the separation channel to the polymer solution.
52. The method of Paragraph 50, where the covalent functionalization comprises binding organosilanes to the surface.
53. The method of Paragraph 52, where the organosilanes are comprised of alkyl and aryl silanes.
54. The method of Paragraph 50, where the covalent functionalization comprises binding polymers to the surface.
55. The method of Paragraph 50, where the covalent functionalization comprises binding organometalic compounds to the surface.
56. A coating adsorbed on a surface of a device, comprising a polymeric backbone grafted with polymeric chains, said polymeric chains comprising at least one hydrophilic functional group X and at least one capture group Y.
57. The coating of Paragraph 56, wherein said at least one hydrophilic functional group X comprises primary amide groups.
58. The coating of Paragraph 56, wherein said at least one capture group Y comprises an alkyl or aryl halide, an azo or peroxy group, a diazirine, an azide group, an acetophenone, a benzophenone or an anthraquinone derivative, or mixtures thereof.
59. The coating of Paragraph 56, wherein said at least one capture group Y forms covalent attachments to analytes upon activation.
60. The coating of Paragraph 56, wherein said at least one capture group Y forms covalent attachments to analytes upon activation with light.
61. A kit comprising: the microfluidic device of Paragraph 1 and one or more reagents, or one or more samples, or combinations thereof.

## Claims

1. A coating adsorbed on a surface of a microfluidic device, comprising a polymeric backbone grafted with polymeric chains, said polymeric chains comprising at least one hydrophilic functional group X and at least one capture group Y.

2. The coating of claim 1, wherein said at least one hydrophilic functional group X comprises primary amide groups.

3. The coating of claim 1, wherein said at least one capture group Y comprises an alkyl or aryl halide, an azo or peroxy group, a diazirine, an azide group, an acetophenone, a benzophenone or an anthraquinone derivative, or mixtures thereof.

4. The coating of claim 1, wherein said at least one capture group Y forms covalent attachments to analytes upon thermal or chemical activation.

5. The coating of claim 1, wherein said at least one capture group Y forms covalent attachments to analytes upon activation with light.

6. A microfluidic device comprising at least one surface that has a coating adsorbed thereon, the coating including a polymeric backbone grafted with polymeric chains, said polymeric chains including at least one hydrophilic functional group X and at least one capture group Y, the at least one surface being functionalized via the polymeric backbone.

7. The microfluidic device of claim 6, wherein the at least one surface is functionalized via the polymeric backbone prior to the at least one surface being exposed to a polymer solution capable of being selectively triggered to bind to one or more analytes.

8. The microfluidic device of claim 6, wherein said at least one hydrophilic functional group X comprises primary amide groups.

9. The microfluidic device of claim 6, wherein said at least one capture group Y comprises an alkyl or aryl halide, an azo or peroxy group, a diazirine, an azide group, an acetophenone, a benzophenone or an anthraquinone derivative, or mixtures thereof.

10. The microfluidic device of claim 6, wherein said at least one capture group Y forms covalent attachments to analytes upon photo-activation, thermal activation or chemical activation.

11. The microfluidic device of claim 6, wherein said at least one surface is the inner surface of a capillary.

12. The microfluidic device of claim 6, wherein said at least one surface is plastic or glass.
